# FASCICULE DE BREVET EUROPEEN

(11) **EP 1 098 165 B1**
(45) Date de publication et mention de la délivrance du brevet: **20.12.2006**
(21) Numéro de dépôt: 99811013.4
(22) Date de dépôt: 04.11.1999
(51) Int. Cl.: G01B 3/32, G01B 5/00

(54) **Dispositif de déplacement et comparaison de dimensions de cales et procédé pour la comparaison de dimensions au moyen du dispositif précité**
Vorrichtung zum Bewegen und Abmessungsvergleich von Keilen und Verfahren zum Abmessungsvergleich Mittels der genannten Vorrichtung
Device for moving and comparing the dimensions of block gages and method for the comparison of dimensions using said device

(43) Date de publication de la demande: 09.05.2001
(73) Titulaire: TESA SA, 1020 Renens (CH)
(72) Inventeur: Tischler, Karl, 1007 Lausanne (CH)
(74) Mandataire: BOVARD AG

(56) Documents cités:
- EP-A- 0 018 945
- EP-A- 0 115 243
- EP-A- 0 887 618
- FR-A- 2 544 854
- FR-A- 2 620 815
- PATENT ABSTRACTS OF JAPAN vol. 1996, no. 04, 30 avril 1996 (1996-04-30) & JP 07 324904 A (MITSUTOYO CORP), 12 décembre 1995 (1995-12-12)

## Description

L'invention se rapporte à un dispositif de déplacement d'au moins deux objets pour la comparaison de dimensions de ces objets au moyen d'un appareil de mesure, et à un procédé pour la comparaison de dimensions au moyen du dispositif précité.

L'invention intéresse plus particulièrement, mais non exclusivement, le domaine du contrôle dimensionnel des cales étalons, qu'il s'agisse de cales neuves ou de cales qui ont déjà été utilisées.

Le dispositif de l'invention intéresse avantageusement la comparaison traditionnelle d'une cale de référence et d'une cale à mesurer de même longueur, mais aussi la comparaison d'une cale de référence unique et de cales à mesurer de longueurs différentes.

Une cale étalon est un objet qui présente au moins deux faces parallèles espacées d'une distance très précise, dite longueur.

Les cales étalons sont des objets de très haute précision qui sont couramment utilisés, par exemple dans les ateliers de fabrication mécanique, notamment, pour mesurer des longueurs.

Aux termes de la norme ISO 3650, une cale-étalon est une mesure matérialisée, habituellement de section rectangulaire, exécutée en un matériau résistant à l'usure, présentant deux faces de mesure planes et parallèles entre elles, qui doivent pouvoir adhérer aux faces de mesures d'autres cales-étalons pour composer des assemblages, ou aux surfaces planes de même finition de plans auxiliaires utilisés pour les mesures de longueur.

Egalement aux termes de la norme ISO 3650, la longueur d'une cale-étalon, par convention, est la distance entre tout point particulier d'une face de mesure et la surface plane d'un plan auxiliaire de même matériau et de même état de surface sur lequel est accolée l'autre face de mesure.

De telles cales étalons sont fréquemment manipulées et placées au contact les unes des autres et/ou au contact d'autres objets.

Ces contacts mécaniques engendrent une usure progressive des faces des cales qui déterminent leur longueur.

Une telle usure, aussi infime soit-elle, modifie donc la longueur des cales et engendre des erreurs de mesure.

Il est donc impératif que les cales soient périodiquement contrôlées afin que celles qui présentent une usure anormale, puissent être localisées en vue d'être écartées de l'utilisation.

Pour ce contrôle, il est connu de comparer, d'une part, l'espacement des faces opposées qui déterminent la longueur de chaque cale utilisée avec, d'autre part, l'espacement de faces opposées d'une cale de référence.

Classiquement, la mesure de la longueur d'une cale est effectuée entre des points d'une pluralité de paires de points, par exemple, pour une cale parallélépipédique rectangle, entre des points situés aux sommets de diagonales des faces opposées et, entre des points situés à l'intersection des diagonales de ces faces.

A cet effet, on met en oeuvre un dispositif comprenant :
- un support, dit table de mesure, qui définit un plan d'appui et de glissement commun pour la cale de référence et la cale à mesurer, et ce, pour l'une de leurs faces concernées par la mesure,
- une pièce, dite chablon, qui, d'une part, est située au-dessus de la table de mesure et porte des butées disposées pour, en coopérant avec les faces latérales des cales, les maintenir dans une position et une orientation déterminées, et ce, en préservant leur libre appui sur la table de mesure et, d'autre part, est portée par un moyen de guidage selon deux axes sécants parallèles au plan d'appui, de manière à permettre un déplacement simultané des cales.

De préférence, le dispositif comprend un moyen d'assistance au guidage du déplacement du chablon selon un cheminement privilégié pour induire un déplacement simultané des deux cales de manière à permettre,
- le positionnement de la cale de référence entre deux organes palpeurs de l'appareil de mesure, afin d'autoriser sur cette cale un relevé par appui desdits organes palpeurs chacun sur l'une des faces opposées de la cale,
- le déplacement de la cale de référence et celui de la cale à contrôler, de manière à les substituer l'une à l'autre et à présenter la cale à contrôler entre lesdits organes palpeurs, et ce, successivement dans chacune des positions de relevé.

Un appareil de mesure équipé d'un tel dispositif de déplacement est extrêmement fiable et son utilisation est également simple et rapide.

Ce dispositif de l'état de la technique donne de bons résultats, mais on lui reproche d'engendrer une certaine usure de chaque cale de référence, car celle-ci reste en appui sur la table de mesure pendant les relevés effectués sur la cale à contrôler.

Un résultat que l'invention vise à obtenir est précisément un dispositif de déplacement de cales qui, tout en présentant les avantages du dispositif connu, réduit notablement l'usure de la cale de référence.

A cet effet, l'invention a pour objet un dispositif de déplacement notamment caractérisé en ce que le chablon est constitué d'au moins deux parties distinctes qui peuvent être déplacées séparément l'une de l'autre, dont :
- une première partie qui comprend les butées destinées au maintien latéral de la cale de référence sur la table de mesure et,
- au moins une autre partie, dite seconde partie, qui comprend les butées destinées au maintien latéral d'au moins une cale à contrôler.

L'invention a également pour objet un procédé pour la comparaison de dimensions au moyen du dispositif de déplacement précité.

L'invention sera bien comprise à la lecture de la description ci-après faite à titre d'exemple non limitatif en regard du dessin ci-annexé qui représente schématiquement :
figure 1 : le dispositif de l'invention en vue de dessus,

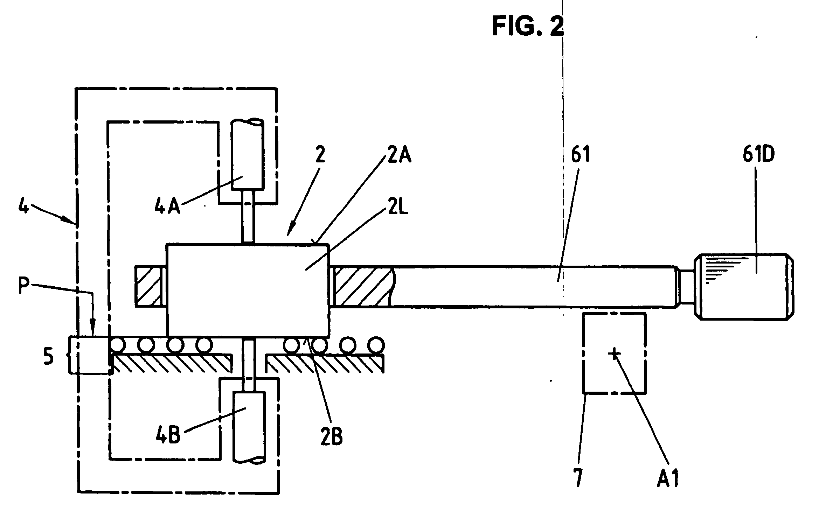

figure 2 : le dispositif de l'invention vu latéralement,
figures 3A à 3C : en vue de dessus et à échelle réduite, le dispositif de l'invention représenté dans trois phases d'utilisation.

En se reportant au dessin, il est figuré un dispositif 1 de déplacement d'au moins deux objets 2, 3, dits cales, en vue de la comparaison de dimensions de ces cales au moyen d'un appareil 4 de mesure.

Plus particulièrement, les objets 2, 3 sont des cales étalons, c'est-à-dire des cales qui présentent chacune au moins deux faces 2A, 2B, 3A, 3B parallèles espacées d'une distance très précise, dite longueur.

Dans la description qui suit, on utilise le terme de cale pour désigner généralement des objets qui présentent deux faces opposées 2A, 2B, 3A, 3B parallèles espacées d'une distance déterminée.

Le dispositif 1 de déplacement est destiné à équiper un appareil de mesure 4 pour le contrôle de la longueur d'une pluralité de cales 3, et ce, par comparaison, d'une part, de l'espacement des faces opposées 3A, 3B qui déterminent la longueur de chaque cale 3 à contrôler avec, d'autre part, l'espacement de faces opposées 2A, 2B d'une cale 2 de référence.

Le dispositif 1 comprend :
- un support 5, dit table de mesure 5, qui définit un plan (P) d'appui et de glissement commun pour la cale de référence 2 et la cale à contrôler 3, et ce, pour l'une 2A, 3A de leurs faces 2A, 2B, 3A, 3B concernées par la mesure,
- une pièce 6, dite chablon, qui, d'une part, est située au-dessus de la table de mesure 5 et porte des butées 61A, 62A disposées pour, en coopérant avec les faces latérales 2L, 3L des cales, les maintenir dans une position et une orientation déterminées relativement à l'appareil 4 de mesure, tout en préservant leur libre appui sur la table de mesure 5 et, d'autre part, est mobile au-dessus de cette table 5, notamment, de manière à permettre un déplacement des cales 2, 3 sur ladite table de mesure 5, afin de les amener au niveau d'au moins un organe palpeur 4A, 4B de l'appareil 4 de mesure,

Avantageusement, la pièce 6, dite chablon, est mobile selon au moins un axe A1, A2, A3 parallèle au plan d'appui P, de manière à permettre un déplacement des cales 2, 3 sur ladite table de mesure 5, afin de pouvoir les placer au contact d'au moins un organe palpeur 4A, 4B de l'appareil 4 de mesure.

Par exemple, la table de mesure 5 est constituée par des génératrices longitudinales d'une pluralité de tiges cylindriques, dites piges, maintenues parallèlement entre elles sur une pièce rigide, quant à elle portée par le bâti (non représenté) de l'appareil de mesure 4 équipé du dispositif de déplacement selon l'invention.

En général, la mesure de la longueur d'une cale 3 est effectuée au moyen de deux organes palpeurs 4A, 4B opposés qui sont placés en appui chacun sur l'une des deux faces opposées 2A, 2B, 3A, 3B déterminant la longueur, et ce, après que la cale à mesurer a été amenée entre ces organes.

L'appareil comprend un moyen commandé, notamment de manière automatique, en vue, d'une part, de la mise en contact des organes palpeurs avec les faces opposées de la cale et, d'autre part, du recul de ses organes lorsque la mesure a été effectuée.

Tel que cela a été annoncé, la mesure de la longueur de la cale 3 est de préférence réalisée entre des points d'une pluralité de points 3C, 3D, par exemple, pour une cale 3 parallélépipédique rectangle, entre des points 3C situés aux sommets de diagonales des faces opposées 3A, 3B et, entre des points 3D situés à l'intersection des diagonales de ces faces.

De manière remarquable, le chablon 6 est constitué d'au moins deux parties distinctes 61, 62 qui peuvent être déplacées séparément l'une de l'autre, dont :
- une première partie 61 qui, d'une part, comprend les butées 61A destinées au maintien latéral de la cale 2 de référence sur la table de mesure 5 et,
- au moins une autre partie, dite seconde partie 62, qui comprend les butées destinées au maintien latéral d'au moins une cale 3 à contrôler.

D'une autre manière remarquable, le chablon 6 est constitué d'au moins deux parties distinctes 61, 62 qui peuvent être déplacées séparément l'une de l'autre, dont :
- une première partie 61 qui, d'une part, comprend les butées 61A destinées au maintien latéral de la cale 2 de référence sur la table de mesure 5 et, d'autre part, coopère avec un moyen 7 de guidage selon le premier axe A1 de déplacement,
- au moins une autre partie, dite seconde partie 62 qui, d'une part, comprend les butées destinées au maintien latéral d'au moins une cale 3 à contrôler et, d'autre part, coopère avec un moyen 8 de guidage selon deux axes croisés A2, A3 parallèles à la table de mesure 5, au moins l'un A2 de ces axes A2, A3 étant parallèle audit premier axe A1.

L'invention a également pour objet un procédé de déplacement d'au moins deux objets pour la comparaison de dimensions de ces objets au moyen d'un appareil de mesure.

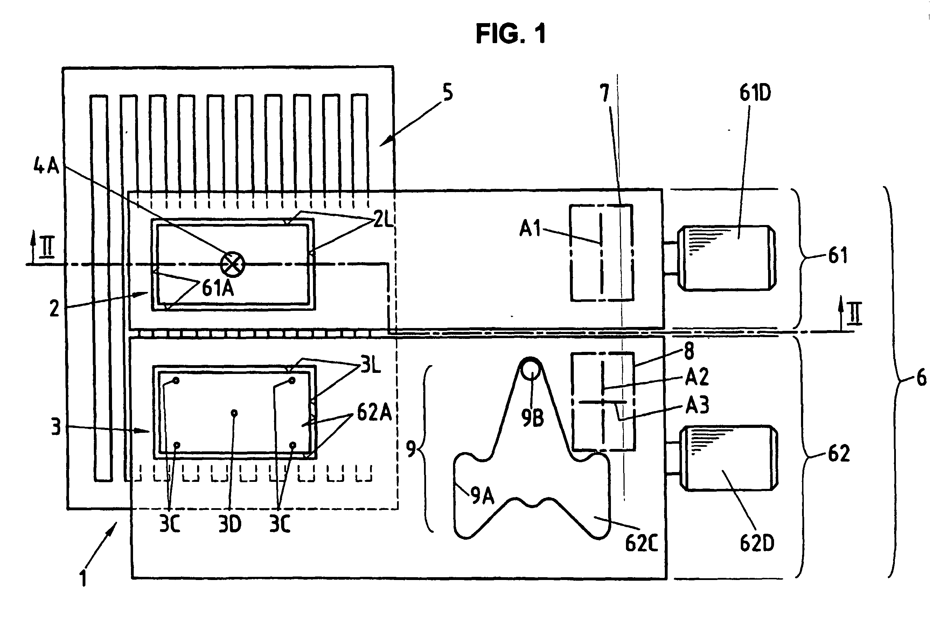

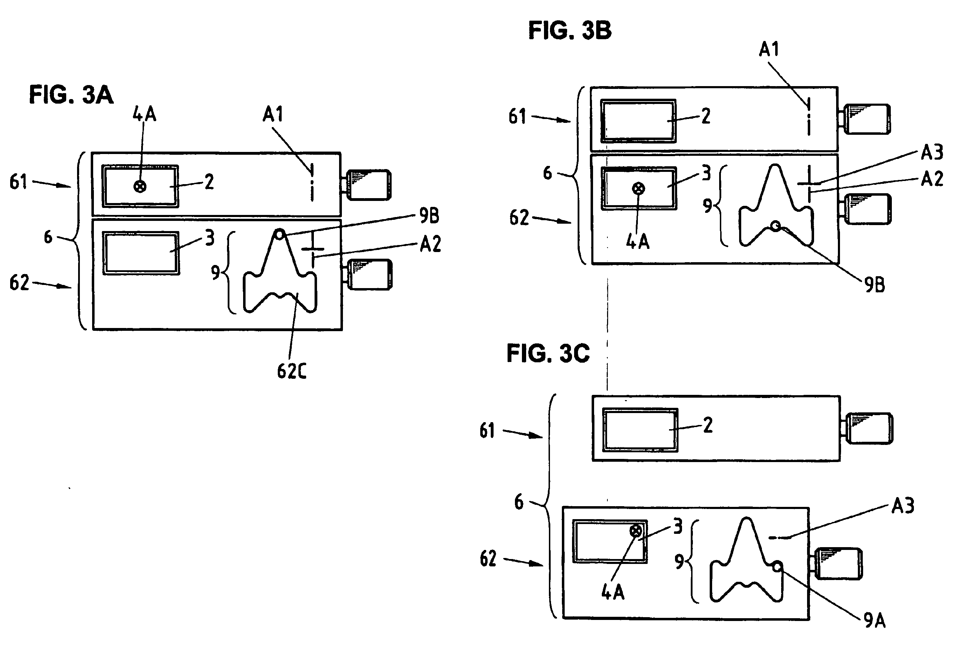

Selon ce procédé :
- on dispose la cale 2 de référence dans une découpe de la première partie 61 du chablon et au moins une cale 3 à contrôler dans la découpe d'une deuxième partie 62 de chablon, puis
- par déplacement de la première partie 61 du chablon 6 (figures 1, 3A), on amène la cale 2 de référence au contact d'au moins un organe palpeur 4A, 4B, notamment, puis
- par action sur la seconde partie 62 du chablon 6, on déplace la première partie 61 du chablon et la cale 2 de référence afin qu'une cale 3 à contrôler lui soit substituée (figure 3B), puis
- encore par déplacement de la seconde partie 62 du chablon 6, on déplace la cale à contrôler vers au moins une autre position de mesure (figure 3C).

On comprend donc que, après que la cale 2 de référence a été placée au contact d'au moins un organe palpeur 4A, 4B, notamment, par déplacement de la première partie 61 du chablon 6 (figures 1, 3A), cette cale 2 peut être déplacée afin que, par déplacement d'une seconde partie 62 du chablon 6, une cale 3 à contrôler lui soit substituée (figure 3B), puis soit déplacée en au moins une autre position de mesure (figure 3C).

On comprend également que la cale 2 de référence et la cale 3 à contrôler peuvent, le cas échéant, être déplacées indépendamment l'une de l'autre.

Lors des déplacements d'une seconde partie 62 du chablon 6, la cale 2 de référence n'est donc plus inutilement déplacée sur la table de mesure 5.

Sur le dessin, on peut constater cela en observant les figures 3B et 3C.

Les moyens 7, 8 de guidage n'ont pas été représentés en détails.

L'homme du métier sait choisir les moyens appropriés au guidage recherché.

De préférence, on met en oeuvre une cale de référence de même dimension nominale que les cales à contrôler.

Dans une forme remarquable du procédé selon l'invention :
- d'une part, on met en oeuvre,
   - une cale de référence 2 de dimension nominale distincte de la dimension nominale des cales à contrôler 3, c'est-à-dire une cale 2 de référence dont la dimension nominale présente un écart notable déterminé avec la cale à contrôler 3 et,
   - un appareil de mesure 4 dont un organe palpeur 4A, 4B au moins, peut dans la direction de la mesure, être déplacé avec une grande précision sur une distance importante, telle l'écart de dimension nominale qui sépare la cale de référence d'une cale à contrôler et,
- d'autre part, après avoir étalonné l'appareil de mesure 4 par appui d'au moins un organe palpeur sur la cale de référence 2, on déplace ledit organe palpeur d'au moins l'écart de dimension qui sépare la dimension nominale de la cale de référence 2 de la dimension nominale de la cale à contrôler 3 puis, on effectue les mesures en intégrant la valeur du déplacement de l'organe palpeur qui est due à la différence de dimensions nominales.

Par l'expression "en intégrant", on désigne une opération de traitement d'informations issues du et/ou des organes palpeurs, qui permet à l'appareil de mesure, notamment en vue d'un affichage de la mesure, de faire abstraction de la valeur du déplacement commandé pour compenser l'écart de dimensions nominales connu entre la cale de référence et la cale à contrôler.

Dans une forme préférée de l'invention, on met en oeuvre un appareil de mesure 4 équipé d'au moins un capteur à haute précision sur une longue course et, par exemple, un capteur du type à incrémentation.

D'une autre manière remarquable :
- le chablon 6 est constitué d'au moins deux parties distinctes 61, 62 qui peuvent être déplacées séparément l'une de l'autre, dont une première 61 et au moins une seconde partie 62, lesquelles sont juxtaposables et, à cet effet, présentent en vis-à-vis des butées 61B, 62B dites de déplacement destinées à coopérer de manière telle que l'une des parties 61, 62 puisse pousser l'autre lors d'un déplacement selon deux axes parallèles A1, A2,
- la première partie 61 du chablon 6, d'une part, comprend les butées 61A destinées au maintien latéral de la cale 2 de référence sur la table de mesure 5 et, d'autre part, coopère avec un moyen 7 de guidage selon le premier A1 axe de déplacement,
- chaque seconde partie 62 du chablon, d'une part, comprend les butées 62A destinées au maintien latéral d'au moins une cale 3 à contrôler et, d'autre part, coopère avec un moyen 8 de guidage selon deux axes croisés A2, A3 parallèles à la table de mesure 5, au moins l'un A2 de ces axes A2, A3 étant parallèles audit premier axe A1.

De préférence, le dispositif 1 comprend un moyen 9 d'assistance au guidage du déplacement du chablon 6 selon un cheminement privilégié pour induire un déplacement simultané des deux cales 2, 3.

Ce moyen 9 d'assistance comprend des éléments 9A, 9B qui permettent d'assurer :
- le positionnement de la cale 2 de référence au niveau d'au moins un organe palpeur 4A, 4B de l'appareil de mesure 4, afin d'autoriser sur cette cale 2 un relevé par appui dudit organe palpeur 4A, 4B sur au moins l'une des faces opposées 2A, 2B de la cale 2,
- le déplacement de la cale 2 de référence et celui d'au moins une cale 3 à contrôler, de manière à les substituer l'une à l'autre et à présenter la cale à contrôler au niveau de l'organe palpeur 4A, 4B, et ce, successivement dans chacune des positions de relevé.

Le moyen 9 d'assistance comprend classiquement deux éléments fonctionnels distincts 9A, 9B dont, d'une part, un chemin 9A de came qui détermine un cheminement privilégié pour les cales 2, 3 et, d'autre part, un organe 9B lecteur de ce chemin de came 9A, ces éléments 9A, 9B étant associés aux éléments fonctionnels du dispositif 1 de manière à coopérer et, au moins, privilégier un cheminement pour le chablon 6 et donc pour le déplacement des cales vers au moins un organe palpeur 4A, 4B.

Avantageusement, d'une part, le chemin de came 9A est constitué par le flanc 9A d'une découpe 62C aménagée dans le chablon 6 et, d'autre part, l'organe lecteur 9B consiste en un galet au moins indirectement relié à la table de mesure 5.

De manière remarquable, c'est au moins une seconde partie 62 du chablon 6 qui est placée sous l'influence du moyen 9 d'assistance au guidage du déplacement selon le cheminement privilégié.

De manière encore remarquable, lorsque le dispositif 1 comprend un moyen 9 d'assistance au guidage du déplacement du chablon 6 selon un cheminement privilégié pour induire un déplacement simultané des deux cales 2, 3 selon au moins un axe A2, A3, c'est une seconde partie 62 du chablon 6 qui comprend au moins l'un des éléments 9A, 9B de ce moyen 9.

De manière notable:
- la première partie 61 du chablon 6 est constituée par une plaque 61 sensiblement quadrilatère rectangle, qui, d'une part, comprend une découpe dont la face périphérique constitue les butées 61A destinées au maintien latéral de la cale 2 de référence et, d'autre part, coopère avec un moyen 7 de guidage selon le premier axe A1 de déplacement,
- au moins une seconde partie 62 du chablon 6 est constituée par une plaque 62 qui, d'une part, comprend une découpe dont la face périphérique constitue les butées 62A destinées au maintien latéral d'au moins une cale 3 à contrôler et, d'autre part, coopère avec un moyen 8 de guidage selon deux axes croisés A2, A3 parallèles à la table de mesure 5, au moins l'un A2 de ces axes A2, A3 étant parallèles audit premier axe A1,
- les plaques sont orientées et reliées à leur moyen de guidage de manière telle qu'elles présentent en vis-à-vis deux rives 61B, 62B à même de coopérer pour que l'une des parties 61, 62 puisse pousser l'autre lors d'un déplacement selon deux axes parallèles A1, A2.

Avantageusement, la plaque qui constitue la seconde partie 62 du chablon 6 équipée du moyen 9 d'assistance au guidage, comprend une découpe 62C dont le flanc 9A constitue le chemin 9A de came et, d'autre part, l'organe lecteur 9B consiste en un galet au moins indirectement relié à la table de mesure 5.

De préférence, chacune des plaques 61, 62 comprend un bouton de manoeuvre 61D, 62D.

## Revendications

1. Dispositif (1) de déplacement d'au moins deux objets (2, 3), dits cale de référence et cale à contrôler, en vue de la comparaison de dimensions de ces cales au moyen d'un appareil (4) de mesure,
lequel dispositif (1) de déplacement comprend :
- un support (5), dit table de mesure, qui définit un plan (P) d'appui et de glissement commun pour la cale de référence (2) et la cale à contrôler (3), et ce, pour l'une (2A, 3A) de leurs faces (2A, 2B, 3A, 3B) concernées par la mesure,
- une pièce (6), dite chablon, qui, d'une part, est située au-dessus de la table de mesure (5) et porte des butées (61A, 62A) disposées pour, en coopérant avec les faces latérales (2L, 3L) des cales, les maintenir dans une position et une orientation déterminées relativement à l'appareil (4) de mesure, tout en préservant leur libre appui sur la table de mesure (5) et, d'autre part, est mobile au-dessus de cette table (5),
ce dispositif est **caractérisé en ce que** le chablon (6) est constitué d'au moins deux parties distinctes (61, 62) qui peuvent être déplacées séparément l'une de l'autre, dont :
- une première partie (61) qui comprend les butées (61A) destinées au maintien latéral de la cale (2) de référence sur la table de mesure (5) et,
- au moins une autre partie, dite seconde partie (62), qui comprend les butées (62A) destinées au maintien latéral d'au moins une cale (3) à contrôler.

2. Dispositif (1) de déplacement d'au moins deux objets (2, 3), dits cale de référence et cale à contrôler, en vue de la comparaison de dimensions de ces cales au moyen d'un appareil (4) de mesure,
lequel dispositif (1) de déplacement comprend :
- un support (5), dit table de mesure, qui définit un plan (P) d'appui et de glissement commun pour la cale de référence (2) et la cale à contrôler (3), et ce, pour l'une (2A, 3A) de leurs faces (2A, 2B, 3A, 3B) concernées par la mesure,
- une pièce (6), dite chablon, qui, d'une part, est située au-dessus de la table de mesure (5) et porte des butées (61A, 62A) disposées pour, en coopérant avec les faces latérales (2L, 3L) des cales, les maintenir dans une position et une orientation déterminées relativement à l'appareil (4) de mesure, tout en préservant leur libre appui sur la table de mesure (5) et, d'autre part, est mobile selon au moins un axe (A1, A2, A3) parallèle au plan d'appui (P), de manière à permettre un déplacement des cales (2, 3) sur ladite table de mesure (5),
ce dispositif est **caractérisé en ce que** le chablon (6) est constitué d'au moins deux parties distinctes (61, 62) qui peuvent être déplacées séparément l'une de l'autre, dont :
- une première partie (61) qui, d'une part, comprend les butées (61A) destinées au maintien latéral de la cale (2) de référence sur la table de mesure (5) et, d'autre part, coopère avec un moyen (7) de guidage selon le premier axe (A1) de déplacement,
- au moins une autre partie, dite seconde partie (62) qui, d'une part, comprend les butées (62A) destinées au maintien latéral d'au moins une cale (3) à contrôler et, d'autre part, coopère avec un moyen (8) de guidage selon deux axes croisés (A2, A3) parallèles à la table de mesure (5), au moins l'un (A2) de ces axes (A2, A3) étant parallèle au dit premier axe (A1).

3. Dispositif (1) de déplacement d'au moins deux objets (2, 3), dits cale de référence et cale à contrôler, en vue de la comparaison de dimensions de ces cales au moyen d'un appareil (4) de mesure,
lequel dispositif (1) de déplacement comprend :
- un support (5), dit table de mesure, qui définit un plan (P) d'appui et de glissement commun pour la cale de référence (2) et la cale à contrôler (3), et ce, pour l'une (2A, 3A) de leurs faces (2A, 2B, 3A, 3B) concernées par la mesure,
- une pièce (6), dite chablon, qui, d'une part, est située au-dessus de la table de mesure (5) et porte des butées (61A, 62A) disposées pour, en coopérant avec les faces latérales (2L, 3L) des cales, les maintenir dans une position et une orientation déterminées relativement à l'appareil (4) de mesure, tout en préservant leur libre appui sur la table de mesure (5) et, d'autre part, est mobile selon au moins un axe (A1, A2, A3) parallèle au plan d'appui (P), de manière à permettre un déplacement des cales (2, 3) sur ladite table de mesure (5),
ce dispositif étant **caractérisé en ce que** :
- le chablon (6) est constitué d'au moins deux parties distinctes (61, 62) qui peuvent être déplacées séparément l'une de l'autre, dont une première (61) et au moins une seconde partie (62), lesquelles, sont juxtaposables et, à cet effet, présentent en vis-à-vis des butées (61B, 62B) dites de déplacement destinées à coopérer de manière telle que l'une des parties (61, 62) puisse pousser l'autre lors d'un déplacement selon deux axes parallèles (A1, A2),
- la première partie (61) du chablon (6), d'une part, comprend les butées (61A) destinées au maintien latéral de la cale (2) de référence sur la table de mesure (5) et, d'autre part, coopère avec un moyen (7) de guidage selon le premier (A1) axe de déplacement,
- chaque seconde partie (62) du chablon (6), d'une part, comprend les butées (62A) destinées au maintien latéral d'au moins une cale (3) à contrôler et, d'autre part, coopère avec un moyen (8) de guidage selon deux axes croisés (A2, A3) parallèles à la table de mesure (5), au moins l'un (A2) de ces axes (A2, A3) étant parallèle audit premier axe (A1).

4. Dispositif selon l'une quelconque des revendications 1 à 3, **caractérisé en ce qu'**au moins une dite seconde partie (62) du chablon (6) est, au moins indirectement, placée sous l'influence d'un moyen (9) d'assistance au guidage du déplacement du chablon (6) selon un cheminement privilégié pour induire un déplacement simultané des cales (2, 3) de référence et à contrôler selon au moins un axe (A2, A3).

5. Dispositif selon la revendication 4, **caractérisé en ce que** la seconde partie (62) du chablon (6) comprend au moins un élément (9A, 9B) du moyen (9) d'assistance.

6. Dispositif selon l'une quelconque des revendications 2 à 5,
**caractérisé en ce que** :
- la première partie (61) du chablon (6) est constituée par une plaque (61) sensiblement quadrilatère rectangle, qui, d'une part, comprend une découpe dont la face périphérique constitue les butées (61A) destinées au maintien latéral de la cale (2) de référence et, d'autre part, coopère avec un moyen (7) de guidage selon le premier axe (A1) de déplacement,
- au moins une seconde partie (62) du chablon (6) est constituée par une plaque (62) qui, d'une part, comprend une découpe dont la face périphérique constitue les butées (62A) destinées au maintien latéral d'au moins une cale (3) à contrôler et, d'autre part, coopère avec un moyen (8) de guidage selon deux axes croisés (A2, A3) parallèles à la table de mesure (5), au moins l'un (A2) de ces axes (A2, A3) étant parallèle audit premier axe (A1),
- les plaques sont orientées et reliées à leur moyen de guidage de manière telle qu'elles présentent en vis-à-vis deux rives (61B, 62B) à même de coopérer pour que l'une des parties (61, 62) puisse pousser l'autre lors d'un déplacement selon deux axes parallèles (A1, A2).

7. Dispositif selon la revendication 6, **caractérisé en ce que** la plaque qui constitue la seconde partie (62) du chablon (6) équipée du moyen (9) d'assistance au guidage, comprend une découpe (62C) dont le flanc (9A) constitue le chemin (9A) de came et, d'autre part, l'organe lecteur (9B) consiste en un galet au moins indirectement relié à la table de mesure (5).

8. Procédé pour la comparaison de dimensions d'objets au moyen d'un appareil de mesure équipé d'un dispositif (1) de déplacement d'au moins deux objets (2, 3), dits cale de référence et cale à contrôler, selon l'une quelconque des revendication 1 à 7 **caractérisé en ce que** :
- on dispose la cale (2) de référence dans une découpe de la première partie (61) du chablon et au moins une cale (3) à contrôler dans la découpe d'une deuxième partie (62) de chablon, puis
- par placement de la première partie (61) du chablon (6), on amène la cale (2) de référence au contact d'au moins un organe palpeur (4A, 4B) notamment, puis
- par action sur la seconde partie (62) du chablon (6), on déplace la première partie (61) du chablon et la cale (2) de référence afin qu'une cale (3) à contrôler lui soit substituée, puis
- encore par déplacement de la seconde partie (62) du chablon (6), on déplace la cale à contrôler vers au moins une autre position de mesure.

9. Procédé selon la revendication 8 **caractérisé en ce que**,
- d'une part, on met en oeuvre,
. une cale de référence (2) de dimension nominale distincte de la dimension nominale des cales à contrôler (3), c'est-à-dire une cale (2) de référence dont la dimension nominale présente un écart notable déterminé avec la cale à contrôler (3) et,
. un appareil de mesure (4) dont un organe palpeur (4A, 4B) au moins, peut dans la direction de la mesure, être déplacé avec une grande précision sur une distance importante, telle l'écart de dimension nominale qui sépare la cale de référence d'une cale à contrôler et,
- d'autre part, après avoir étalonné l'appareil de mesure (4) par appui d'au moins un organe palpeur sur la cale de référence (2), on déplace ledit organe palpeur d'au moins l'écart de dimension qui sépare la dimension nominale de la cale de référence (2) de la dimension nominale de la cale à contrôler (3) puis, on effectue les mesures en intégrant la valeur du déplacement de l'organe palpeur qui est due à la différence de dimensions nominales.

10. Procédé selon la revendication 9 **caractérisé en ce qu'**on met en oeuvre un appareil de mesure (4) équipé d'au moins un capteur à haute précision sur une longue course, tel un capteur de type incrémental.

## Claims

1. Device (1) for displacement of at least two objects (2, 3), referred to as reference block and block to be checked, with a view to comparison of dimensions of these blocks by means of a measuring apparatus (4),
which displacement device (1) comprises:
- a support (5), referred to as the measuring table, which defines a common supporting and sliding plane (P) for the reference block (2) and the block to be checked (3), and this for one (2A, 3A) of their faces (2A, 2B, 3A, 3B) concerned by the measurement,
- a piece (6), referred to as the template, which is, on the one hand, situated above the measuring table (5) and bears stops (61A, 62A) disposed for maintaining the blocks in a predetermined position and orientation with respect to the measuring apparatus (4), by cooperating with the lateral faces (2L, 3L) of the blocks, while preserving their free support on the measuring table (5), and, on the other hand, is movable above this table (5),
this device being **characterised in that** the template (6) is made up of at least two separate parts (61, 62) which are able to be displaced separately from one another, of which
- a first part (61) that comprises the stops (61A) intended for lateral maintenance of the reference block (2) on the measuring table (5), and
- at least one further part, referred to as the second part (62), that comprises the stops (62A) intended for lateral maintenance of at least one block (3) to be checked.

2. Device (1) for displacement of at least two objects (2, 3), referred to as reference block and block to be checked, with a view to comparison of dimensions of these blocks by means of a measuring apparatus (4),
which displacement device (1) comprises:
- a support (5), referred to as the measuring table, which defines a common supporting and sliding plane (P) for the reference block (2) and the block to be checked (3), and this for one (2A, 3A) of their faces (2A, 2B, 3A, 3B) concerned by the measurement,
- a piece (6), referred to as the template, which is, on the one hand, situated above the measuring table (5) and bears stops (61A, 62A) disposed for maintaining the blocks in a predetermined position and orientation with respect to the measuring apparatus (4), by cooperating with the lateral faces (2L, 3L) of the blocks, while preserving their free support on the measuring table (5), and, on the other hand, is movable along at least one axis (A1, A2, A3) parallel to the supporting plane (P) in such a way as to allow a displacement of the blocks (2, 3) on the said measuring table (5),
this device being **characterised in that** the template (6) is made up of at least two separate parts (61, 62) which are able to be displaced separately from one another, of which
- a first part (61) that, on the one hand, comprises the stops (61A) intended for lateral maintenance of the reference block (2) on the measuring table (5) and, on the other hand, cooperates with a means (7) for guiding along the first axis (A1) of displacement,
- at least one further part that, referred to as the second part (62), comprises the stops (62A) intended for lateral maintenance of at least one block (3) to be checked, on the one hand, and, on the other hand, cooperates with a means (8) for guiding along two cross axes (A2, A3) parallel to the measuring table (5), at least one (A2) of these axes (A2, A3) being parallel to the said first axis (A1).

3. Device (1) for displacement of at least two objects (2, 3), referred to as reference block and block to be checked, with a view to comparison of dimensions of these blocks by means of a measuring apparatus (4),
which displacement device (1) comprises:
- a support (5) which, referred to as the measuring table, defines a common supporting and sliding plane (P) for the reference block (2) and the block to be checked (3), and this for one (2A, 3A) of their faces (2A, 2B, 3A, 3B) concerned by the measurement,
- a piece (6), referred to as the template, which is, on the one hand, situated above the measuring table (5) and bears stops (61A, 62A) disposed for maintaining the blocks in a predetermined position and orientation with respect to the measuring apparatus (4), by cooperating with the lateral faces (2L, 3L) of the blocks, while preserving their free support on the measuring table (5), and, on the other hand, is movable along at least one axis (A1, A2, A3) parallel to the supporting plane (P) in such a way as to allow a displacement of the blocks (2, 3) on the said measuring table (5),
this device being **characterised in that**:
- the template (6) is made up of at least two separate parts (61, 62) which are able to be displaced separately from one another, of which a first part (61) and at least one second part (62) are juxtaposable and, to this end, display vis-à-vis stops (61B, 62B), referred to as displacement stops, intended to cooperate in such a way that one of the parts (61, 62) is able to push the other during a displacement along two parallel axes (A1, A2),
- the first part (61) of the template (6), on the one hand, comprises the stops (61A) intended for lateral maintenance of the reference block (2) on the measuring table (5) and, on the other hand, cooperates with a means (7) for guiding along the first axis (A1) of displacement,
- each second part (62) of the template (6), on the one hand, comprises the stops (62A) intended for lateral maintenance of at least one block (3) to be checked, and, on the other hand, cooperates with a means (8) for guiding along two cross axes (A2, A3) parallel to the measuring table (5), at least one (A2) of these axes (A2, A3) being parallel to the said first axis (A1).

4. Device according to any one of the claims 1 to 3, **characterised in that** at least one said second part (62) of the template (6) is placed, at least indirectly, under the influence of a means (9) of assistance in guiding the displacement of the template (6) along a preferred course for causing a simultaneous displacement of the blocks of reference and to be checked (2, 3) along at least one axis (A2, A3).

5. Device according to claim 4, **characterised in that** the second part (62) of the template (6) comprises at least one element (9A, 9B) of the assistance means (9).

6. Device according to any one of the claims 2 to 5, **characterised in that**:
- the first part (61) of the template (6) is made up of a plate (61), of substantially right-angled quadrilateral shape, which comprises, on the one hand, a cut-out, the peripheral face of which constitutes the stops (61A) intended for lateral maintenance of the reference block (2), and, on the other hand, cooperates with a means (7) of guiding along the first axis (A1) of displacement,
- at least one second part (62) of the template (6) is made up of a plate (62) which comprises, on the one hand, a cut-out, the peripheral face of which constitutes the stops (62A) intended for the lateral maintenance of at least one block (3) to be checked, and, on the other hand, cooperates with a means (8) of guiding along two cross axes (A2, A3) parallel to the measuring table (5), at least one (A2) of these axes (A2, A3) being parallel to the said first axis (A1),
- the plates are oriented and connected to their guide means in such a way that they display vis-à-vis two edges (61B, 62B) able to cooperate so that one of the parts (61, 62) is able to push the other during a displacement along two parallel axes (A1, A2).

7. Device according to claim 6, **characterised in that** the plate, which makes up the second part (62) of the template (6) equipped with the means (9) of assistance in guiding, comprises a cut-out (62C) the flank (9A) of which constitutes the cam track (9A), and, on the other hand, the reading element (9B) consists of a roller connected at least indirectly to the measuring table (5).

8. Method for the comparison of dimensions of objects by means of a measuring apparatus equipped with a device (1) for displacement of at least two objects (2, 3), referred to as reference block and block to be checked, according to any one of the claims 1 to 7, **characterised in that**:
- the reference block (2) is disposed in a cut-out of the first part (61) of the template, and at least one block (3) to be checked is disposed in the cut-out of a second part (62) of the template, then
- by displacement of the first part (61) of the template (6), the reference block (2) is brought into contact with at least one sensing element (4A, 4B) in particular, then
- by action upon the second part (62) of the template (6), the first part (61) of the template (6) and the reference block (2) are displaced so that a block (3) to be checked is substituted therefor, then
- furthermore by displacement of the second part (62) of the template (6), the block to be checked is displaced toward at least one other measurement position.

9. Method according to claim 8, **characterised in that**
- on the one hand, set in operation are:
• a reference block (2) of nominal dimension distinct from the nominal dimension of the blocks to be checked (3), i.e. a reference block (2) whose nominal dimension displays a predetermined notable divergence from the block to be checked (3), and
• a measuring apparatus (4) of which at least one sensing element (4A, 4B) can be displaced in the direction of measurement with great precision over a large distance, such distance as the divergence in nominal dimension which separates the reference block from a block to be checked, and
- on the other hand, after having calibrated the measuring apparatus (4) by pressing of at least one sensing element on the reference block (2), the said sensing element is displaced by at least the divergence in dimension which separates the nominal dimension of the reference block (2) from the nominal dimension of the block to be checked (3), then measurements are carried out by taking into account the value of the displacement of the sensing element which is due to the difference in nominal dimensions.

10. Method according to claim 9, **characterised in that** one sets in operation a measuring apparatus (4) equipped with at least one high precision sensor on a long course such as an incremental type sensor.

## Patentansprüche

1. Vorrichtung (1) zum Verschieben von mindestens zwei, als Bezugsendmaß und als zu prüfendes Endmaß bezeichneten Gegenständen (2, 3) zwecks Maßvergleich dieser Endmaße mittels eines Messgerätes (4),
wobei diese Vorrichtung (1) zum Verschieben Folgendes aufweist:
- eine als Messtisch bezeichnete Auflage (5), die eine gemeinsame Auflage- und Gleitfläche (P) für das Bezugsendmaß (2) und das zu prüfende Endmaß (3) eingrenzt, und dies für eine (2A, 3A) ihrer von der Messung betroffenen Flächen (2A, 2B, 3A, 3B),
- ein als Schablone bezeichnetes Bauteil (6), das einerseits über dem Messtisch (5) liegt und Anschläge (61A, 62A) aufweist, die angeordnet wurden, um in Zusammenwirkung mit den Seitenflächen (2L, 3L) der Endmaße diese in einer bestimmten Position und Ausrichtung zum Messgerät (4) zu halten und hierbei gleichzeitig ihre freie Auflage auf dem Messtisch (5) beizubehalten, und das sich andererseits über diesen Tisch (5) bewegen kann,
diese Vorrichtung ist **dadurch gekennzeichnet, dass** die Schablone (6) mindestens aus zwei verschiedenen Teilen (61, 62) gebildet wird, die unabhängig voneinander verschoben werden können, darunter:
- ein erster Teil (61), der die zum seitlichen Halten des Bezugendmaßes (2) auf dem Messtisch (5) bestimmten Anschläge (61A) aufweist, und
- mindestens ein weiterer, als zweiter Teil (62) bezeichneter Teil, der die zum seitlichen Halten von mindestens einem zu prüfenden Endmaß (3) bestimmten Anschläge (62A) aufweist.

2. Vorrichtung (1) zum Verschieben von mindestens zwei, als Bezugsendmaß und als zu prüfendes Endmaß bezeichneten Gegenständen (2, 3) zwecks Maßvergleich dieser Endmaße mittels eines Messgerätes (4),
wobei diese Vorrichtung (1) zum Verschieben Folgendes aufweist:
- eine als Messtisch bezeichnete Auflage (5), die eine gemeinsame Auflage- und Gleitfläche (P) für das Bezugsendmaß (2) und das zu prüfende Endmaß (3) eingrenzt, und dies für eine (2A, 3A) ihrer von der Messung betroffenen Flächen (2A, 2B, 3A, 3B),
- ein als Schablone bezeichnetes Bauteil (6), das einerseits über dem Messtisch (5) liegt und Anschläge (61A, 62A) aufweist, die angeordnet wurden, um in Zusammenwirkung mit den Seitenflächen (2L, 3L) der Endmaße diese in einer bestimmten Position und Ausrichtung zum Messgerät (4) zu halten und hierbei gleichzeitig ihre freie Auflage auf dem Messtisch (5) beizubehalten, und das sich andererseits entlang mindestens einer parallel zur Auflagefläche (P) verlaufenden Achse (A1, A2, A3) über diesen Tisch (5) bewegen kann, so dass es eine Verschiebung der Endmaße (2,3) auf dem genannten Messtisch (5) ermöglicht,
diese Vorrichtung ist **dadurch gekennzeichnet, dass** die Schablone (6) mindestens aus zwei verschiedenen Teilen (61, 62) gebildet wird, die unabhängig voneinander verschoben werden können, darunter:
- ein erster Teil (61), der einerseits die zum seitlichen Halten des Bezugendmaßes (2) auf dem Messtisch (5) bestimmten Anschläge (61A) aufweist, und der andererseits mit einem Mittel (7) zur Führung entlang der ersten Verschiebungsachse (A1) zusammenwirkt,
- mindestens ein weiterer, als zweiter Teil (62) bezeichneter Teil, der einerseits die zum seitlichen Halten von mindestens einem zu prüfenden Endmaß (3) bestimmten Anschläge (62A) aufweist, und der andererseits mit einem Mittel (8) zur Führung entlang der beiden parallel zum Messtisch (5) verlaufenden, gekreuzten Achsen (A2, A3) zusammenwirkt, wobei mindestens eine (A2) dieser Achsen (A2, A3) zu der genannten ersten Achse (A1) parallel ist.

3. Vorrichtung (1) zum Verschieben von mindestens zwei, als Bezugsendmaß und als zu prüfendes Endmaß bezeichneten Gegenständen (2, 3) zwecks Maßvergleich dieser Endmaße mittels eines Messgerätes (4),
wobei diese Vorrichtung (1) zum Verschieben Folgendes aufweist:
- eine als Messtisch bezeichnete Auflage (5), die eine gemeinsame Auflage- und Gleitfläche (P) für das Bezugsendmaß (2) und das zu prüfende Endmaß (3) eingrenzt, und dies für eine (2A, 3A) ihrer von der Messung betroffenen Flächen (2A, 2B, 3A, 3B),
- ein als Schablone bezeichnetes Bauteil (6), das einerseits über dem Messtisch (5) liegt und Anschläge (61A, 62A) aufweist, die angeordnet wurden, um in Zusammenwirkung mit den Seitenflächen (2L, 3L) der Endmaße diese in einer bestimmten Position und Ausrichtung zum Messgerät (4) zu halten und hierbei gleichzeitig ihre freie Auflage auf dem Messtisch (5) beizubehalten, und das sich andererseits entlang mindestens einer parallel zur Auflagefläche (P) verlaufenden Achse (A1, A2, A3) über diesen Tisch (5) bewegen kann, so dass es eine Verschiebung der Endmaße (2,3) auf dem genannten Messtisch (5) ermöglicht,
diese Vorrichtung ist **dadurch gekennzeichnet, dass**:
- die Schablone (6) mindestens aus zwei verschiedenen Teilen (61, 62) gebildet wird, die unabhängig voneinander verschoben werden können, darunter ein erster Teil (61) und mindestens ein zweiter Teil (62), die nebeneinander angeordnet werden können und hierzu als Verschiebeanschläge bezeichnete gegenüberliegende Anschläge (61B, 62B) aufweisen, die dazu bestimmt sind, derart zusammenzuwirken, dass bei einer Verschiebung entlang zweier paralleler Achsen (A1, A2) einer der Teile (61, 62) den anderen verschieben kann,
- der erste Teil (61) der Schablone (6) einerseits die zum seitlichen Halten des Bezugendmaßes (2) auf dem Messtisch (5) bestimmten Anschläge (61 A) aufweist, und andererseits mit einem Mittel (7) zur Führung entlang der ersten Verschiebungsachse (A1) zusammenwirkt,
- jeder zweiter Teil (62) der Schablone (6) einerseits die zum seitlichen Halten des zu prüfenden Endmaßes (3) bestimmten Anschläge (62A) aufweist, und andererseits mit einem Mittel (8) zur Führung entlang der beiden parallel zum Messtisch (5) verlaufenden, gekreuzten Achsen (A2, A3) zusammenwirkt, wobei mindestens eine (A2) dieser Achsen (A2, A3) zu der genannten ersten Achse (A1) parallel ist.

4. Vorrichtung nach einem der Ansprüche 1 bis 3, **dadurch gekennzeichnet, dass** mindestens ein genannter zweiter Teil (62) der Schablone (6) mindestens indirekt dem Einfluss eines Führungshilfsmittels (9) zur Verschiebung der Schablone (6) entlang einer bevorzugten Bahn unterworfen wird, um eine gleichzeitige Verschiebung des Bezugsendmaßes und des zu prüfenden Endmaßes (2,3) entlang mindestens einer Achse (A2, A3) zu bewirken.

5. Vorrichtung nach Anspruch 4, **dadurch gekennzeichnet, dass** der zweite Teil (62) der Schablone (6) mindestens einen Bestandteil (9A, 9B) des Hilfsmittels (9) aufweist.

6. Vorrichtung nach einem der Ansprüche 2 bis 5, **dadurch gekennzeichnet, dass**:
- der erste Teil (61) der Schablone (6) aus einer im Wesentlichen vierseitigen rechteckigen Platte (61) gebildet wird, die einerseits einen Ausschnitt aufweist, dessen Umfangsfläche die zum seitlichen Halten des Bezugendmaßes (2) Anschläge (61A) bildet, und die andererseits mit einem Mittel (7) zur Führung entlang der ersten Verschiebungsachse (A1) zusammenwirkt,
- mindestens ein zweiter Teil (62) der Schablone (6) aus einer Platte (62) gebildet wird, die einerseits einen Ausschnitt aufweist, dessen Umfangsfläche die zum seitlichen Halten des zu prüfenden Endmaßes (3) bestimmten Anschläge (62A) aufweist, und die andererseits mit einem Mittel (8) zur Führung entlang der beiden parallel zum Messtisch (5) verlaufenden, gekreuzten Achsen (A2, A3) zusammenwirkt, wobei mindestens eine (A2) dieser Achsen (A2, A3) zu der genannten ersten Achse (A1) parallel ist,
- die Platten derart zu ihrem Führungsmittel ausgerichtet und mit diesem verbunden sind, dass sie zwei gegenüberliegende Kantenflächen (61B, 62B) aufweisen, die dazu geeignet sind, derart zusammenzuwirken, dass bei einer Verschiebung entlang zweier paralleler Achsen (A1, A2) einer der Teile (61, 62) den anderen verschieben kann.

7. Vorrichtung nach Anspruch 6, **dadurch gekennzeichnet, dass** die Platte, die den zweiten Teil (62) der Schablone (6) bildet, mit einem Führungshilfsmittel (9) ausgestattet ist, dass einen Ausschnitt (62C) aufweist, dessen Flanke (9A) die Kurvenbahn (9A) bildet, und anderseits **dadurch gekennzeichnet, dass** das Leseorgan (9B) aus einer zumindest indirekt mit dem Messtisch (5) verbundenen Rolle besteht.

8. Verfahren zum Maßvergleich von Gegenständen mittels eines Messgerätes, das mit einer Vorrichtung (1) zum Verschieben von mindestens zwei, als Bezugsendmaß und als zu prüfendes Endmaß bezeichneten Gegenständen (2, 3) nach einem der Ansprüche 1 bis 7 ausgerüstet ist, **dadurch gekennzeichnet, dass**:
- man das Bezugsendmaß (2) in einen Ausschnitt des ersten Teils (61) der Schablone und mindestens ein zu prüfendes Endmaß (3) in den Ausschnitt eines zweiten Teils (62) der Schablone einsetzt und dann
- durch Verschieben der ersten Teils (61) der Schablone (6) das Bezugsendmaß (2) insbesondere mit mindestens einem Tastorgan (4A, 4B) in Berührung bringt zu und dann
- durch Betätigung des zweiten Teils (62) der Schablone (6) den ersten Teil (61) der Schablone und das Bezugsendmaß (2) verschiebt, um ihn durch ein zu prüfendes Endmaß (3) zu ersetzen und dann
- wiederum durch Verschieben des zweiten Teils (62) der Schablone (6) das zu prüfende Endmaß in Richtung von mindestens einer anderen Messposition verschiebt.

9. Verfahren nach Anspruch 8, **dadurch gekennzeichnet, dass**:
- man einerseits
. ein Bezugsendmaß (2) mit einem vom Nennmaß der zu prüfenden Endmaßes (3) abweichenden Nennmaß, das heißt ein Bezugsendmaß (2), dessen Nennmaß eine festgelegte beachtliche Abweichung zum zu prüfenden Endmaß (3) aufweist verwendet, sowie
. ein Messgerät (4), von dem mindestens ein Tastorgan (4A, 4B) mit hoher Genauigkeit in Richtung der Messung über eine große Entfernung, wie die Nennmaßabweichung, die ein Bezugsendmaß von einem zu prüfenden Endmaß trennt, verschoben werden kann.
- man andererseits, nach der Kalibrierung des Messgerätes (4) durch Anlegen von mindestens einem Tastorgan an das Bezugsendmaß (2) das genannte Tastorgan mindestens um die Maßabweichung verschiebt, die das Nennmaß des Bezugsendmaßes (2) vom Nennmaß des zu prüfenden Endmaßes (3) trennt, und man dann die Messungen vornimmt, indem man den Wert der Verschiebung des Tastorgans berücksichtigt, der durch den Unterschied der Nennmaße entsteht.

10. Verfahren nach Anspruch 9, **dadurch gekennzeichnet, dass** man ein Messgerät (4) verwendet, das auf einer langen Wegstrecke mit mindestens einem hochpräzisen Wegaufnehmer, wie zum Beispiel einem Inkrementalgeber ausgerüstet ist.
